# EUROPÄISCHE PATENTSCHRIFT

(11) **EP 1 490 247 B1**
(45) Veröffentlichungstag und Bekanntmachung des Hinweises auf die Patenterteilung: **08.03.2017**
(21) Anmeldenummer: 02774379.8
(22) Anmeldetag: 17.09.2002
(51) Int. Cl.: B60R 11/00

(54) **DACHMODUL FÜR FAHRZEUGE**
ROOF MODULE FOR VEHICLES
MODULE DE TOIT POUR DES VEHICULES

(30) Priorität: 05.10.2001 DE 10149137
(43) Veröffentlichungstag der Anmeldung: 29.12.2004
(73) Patentinhaber: ROBERT BOSCH GMBH, 70442 Stuttgart (DE)
(72) Erfinder: STEUER, Peter, 76149 Karlsruhe (DE); REICHMANN, Siegfried, 77866 Rheinau Freistett (DE)
(86) Internationale Anmeldenummer: PCT/DE2002/003484
(87) Internationale Veröffentlichungsnummer: WO 2003/031232

(56) Entgegenhaltungen:
- US-A- 4 818 010
- US-A- 4 867 498
- US-A- 5 040 990
- US-A- 5 154 617
- US-A- 5 650 929
- US-A- 5 825 096

## Beschreibung

### Technisches Gebiet

Heutige Fahrzeuge, insbesondere heute hergestellte Kraftfahrzeuge, sind in der Regel mit fernbetätigten Schließsystemen, auf eine Referenzuhr abgestimmte Uhren, Navigationssystemen sowie Antennen für den Rundfunkempfang ausgestattet. Die erwähnten Systeme sind dezentral am Fahrzeug untergebracht und stellen jeweils eine separate Schnittstelle zum Informationsaustausch innerhalb bestimmter Sender/Empfänger-Systeme dar. Die sich verschärfenden Auflagen an den Betrieb von Mobiltelefonen während der Fahrt im Kraftfahrzeug machen Lösungen erforderlich, die die Ablenkung der Aufmerksamkeit des Fahrers vom Verkehrsgeschehen auf ein Minimum begrenzen.

### Stand der Technik

In der Dachhimmelstruktur von Kraftfahrzeugen sind heute den Sitzplätzen der Insassen zugeordnete Leselampen, Sonnenblenden, diverse Ablagemöglichkeiten zur Aufnahme von Garagentoröffnern, Sonnenbrillen etc. sowie Displays aufgenommen, die dem Fahrer das Einparken des Fahrzeugs erleichtern und den Abstand zu den Parkraum begrenzenden Hindernissen optisch und akustisch anzeigen. Daneben sind im Dachhimmel Bedienfelder zur Betätigung eines Hub-/Schiebedaches sowie Temperaturanzeiger aufgenommen, die zum Beispiel die Außentemperatur messen und dem Fahrer anzeigen.

Regensensoren werden im allgemeinen an der Windschutzscheibe angebracht und aktivieren bei durch Regentropfen verändertem und dementsprechend erfasster Änderung des Brechungsindex' der Windschutzscheibe automatisch den Scheibenwischerantrieb, ohne dass das Eingreifen des Fahrzeugführers erforderlich wird.

In den Dachhimmel eines Kraftfahrzeugs kann darüber hinaus die Empfangsstation einer Zentralverriegelung aufgenommen sein, auf die der Fahrer zur Aufhebung des Schließzustandes der Fahrzeugtüren ein entsprechendes Sendeteil richtet und nach Senden eines codierten Signals die Verriegelung der Fahrzeugtüren aufgehoben wird.

Die Druckschrift US 5,825,096 A offenbart ein Dachhimmelmodul, indem eine solche Empfangsstation vorgehen ist. Weiterhin umfasst das dort offenbarte Dachhimmelmodul Lampen, eine Steuerung und einen Schalter.

### Darstellung der Erfindung

Mit der erfindungsgemäß vorgeschlagenen Lösung wird ein Dachmodul für den Kfz-Bereich geschaffen, dessen Elektronikbauteile für eine Vielzahl von Funktionen genutzt werden können, so dass es sehr kompakt baut. Es lässt sich in der Serienproduktion sehr einfach einbauen und dank seiner kompakten Bauweise kann das Dachmodul in einem trockenen und schlagunempfindlichen Raum des Kraftfahrzeuges, wie etwa dem Hohlraum zwischen Dachaußenseite und dem Dachhimmel untergebracht werden. Die kompakte Bauweise des Dachmoduls liegt darin begründet, dass die eingebauten Elektronikkomponenten für mehrere Funktionen eingesetzt werden können und somit die Anzahl der Bauteile klein bleibt.

Das Dachmodul bildet eine zentrale Schnittstelle, in welcher Antennen für Navigationssysteme und Rundfunkempfang sowie die Funktion einer Innenraumüberwachung, um einige Beispiele zu nennen, integrierbar sind. Insbesondere bietet das erfindungsgemäß vorgeschlagene Dachmodul die Möglichkeit, eine Freisprechanlage zu integrieren, so dass der Fahrer in seiner Konzentration auf das Verkehrsgeschehen möglichst wenig abgelenkt wird. Neben der Integration einer Freisprechanlage bietet das erfindungsgemäß konfigurierte Dachmodul auch eine Plattform zur Kommunikation mit einem Mobiltelefon. Bei Anwahl des Dachmoduls über ein Mobiltelefon kann der Fahrzeugbesitzer sich schnell über den geschlossen bzw. geöffneten Zustand eines Schiebedaches bzw. eines Hub-/Schiebedaches informieren und bei heraufziehenden Unwettern Schäden vorbeugen.

In einer möglichen Ausführungsvariante lassen sich mehrere Funktionsgruppen im Dachmodul verwirklichen, wobei für jede der Funktionen teilweise identische Bauteile eingesetzt werden können, so dass die Anzahl der im Dachmodul zu integrierenden Elektronikkomponenten gering bleibt. Zur Verhinderung einer übermäßigen Erwärmung, etwa bei starker Sonneneinstrahlung, kann das Dachmodul mit einem Kühlkörper ausgestattet sein, über welchen die entstehende Wärme abtransportiert bzw. dissipiert werden kann.

Eine Funktionsgruppe kann zum Beispiel im Dachmodul dadurch verwirklicht sein, dass das Dachmodul ein Bedienfeld zur Betätigung eines mittels eines Stellantriebes bewegbaren Dachflächenausschnittes enthält, eine Displayausgabe zur Anzeige von Informationen für den Fahrzeugführer sowie zum Beispiel einen Hall-Sensor zur Bestimmung der Drehlage des Stellantriebes der bewegbaren Fläche bzw. für dessen Drehzahlerfassung zur Ermittlung der Position des Dachflächenausschnittes längs seines Verschiebeweges in der Dachfläche des Kraftfahrzeuges.

Eine weitere Funktionsgruppe innerhalb des Dachmoduls kann zum Beispiel die Schnittstelle zu äußeren Kommunikationssystemen darstellen und eine Antenne oder anders gestaltete Empfangseinrichtungen für ein Navigationssystem, für Rundfunkempfang enthalten sowie eine Schnittstelle zur Anwahl des Dachmoduls über ein Mobiltelefon sowie eine über Funk einstellbare Uhr. Ferner können in dieser Funktionsgruppe eine Freisprechanlage, eine Mikrophoneinheit sowie ein Senderteil für die Freisprechanlage im Dachmodul integriert werden. Daneben ist es denkbar, in diese Funktionsgruppe eine automatische Innenspiegel-Abblendung zu integrieren.

In einer dritten, im erfindungsgemäß vorgeschlagenen Dachmodul darstellbaren Funktionsgruppe, lassen sich für den Komfort und die Überwachung des Innenraumes des Kraftfahrzeuges maßgebliche Funktionen integrieren, so zum Beispiel die Aktivierung der Innenbeleuchtung, ein Sensor zur automatischen Lichteinschaltung, Sensorkomponenten, die - abhängig von der Außentemperatur und Sonneneinstrahlung - Antriebe von Sonnenrollos betätigen. Mittels eines ebenfalls im Dachmodul integrierten Sitzbelegungssensors lässt sich erkennen, wo die Insassen innerhalb des Fahrgastraumes des Kraftfahrzeuges Platz genommen haben, woraus die Gewichtsverteilung im Kraftfahrzeug abgeleitet werden kann. Die Gewichtsverteilung innerhalb des Kraftfahrzeuges ist insbesondere für die Auslösung von Systemen zur Erhöhung der passiven Sicherheit der Insassen, wie Airbags und Gurtstraffer, um zwei Beispiele zu benennen, von Bedeutung.

Die dritte Funktionsgruppe kann des weiteren Temperatursensoren für die Außentemperaturanzeige und für die Klimaanlage des Fahrzeuges enthalten, ferner einen Bewegungsmelder, um etwa Bewegungen von Kindern auf den Rücksitzen zu erfassen und zu detektieren, ob etwa beim Rangieren Personen sich im Gefahrenbereich des rangierenden Fahrzeuges aufhalten oder nicht.

Schließlich kann eine vierte Funktionsgruppe im erfindungsgemäß vorgeschlagenen Dachmodul verwirklicht werden, die eine Diebstahlsicherung enthält, mit welcher nach Verriegeln des Fahrzeuges ein akustischer oder optischer Alarmgeber aktiviert werden kann. Es lässt sich ferner ein Regensensor vorsehen, der eine Änderung des Brechungsindex' eines aus Glas bestehenden Schiebedaches bei einsetzendem Regen, erfasst und dementsprechend während der Fahrt die Scheibenwischer aktiviert, ohne dass es eines manuellen Eingriffs des Fahrzeugführers bedürfte. Ferner kann in dieser Funktionsgruppe eine Gebläseansteuerung integriert sein, wobei dem Gebläseantrieb den Antrieb versorgende Solarzellen zugeordnet sein können, die entweder unmittelbar am Dachmodul oder in die Dachfläche integriert sein können. Schließlich lässt sich innerhalb dieser Funktionsgruppe auch die Funktion Garagentoröffnung und Funkfernbedienung integrieren, ferner die Zentralverriegelung zur Betätigung aller Türschließmechanismen von außen nach Verlassen des Fahrzeugs, um dieses gegen Diebstahl zu sichern.

### Zeichnung

Anhand der Zeichnung wird die Erfindung nachstehend eingehender beschrieben.

Es zeigt:
- Figur 1: die Darstellung einer Dachfläche eines Kraftfahrzeuges, die die Fahrgastzelle des Kraftfahrzeuges begrenzt,
- Figur 2: die Darstellung einer Dachfläche gemäß Figur 1 mit alternativer Position von Stellantrieb und
- Figur 3: eine Reihe von Funktionalitäten eines Dachmoduls, welches in die Dachfläche eines Kraftfahrzeuges integrierbar ist.

### Ausführungsvarianten

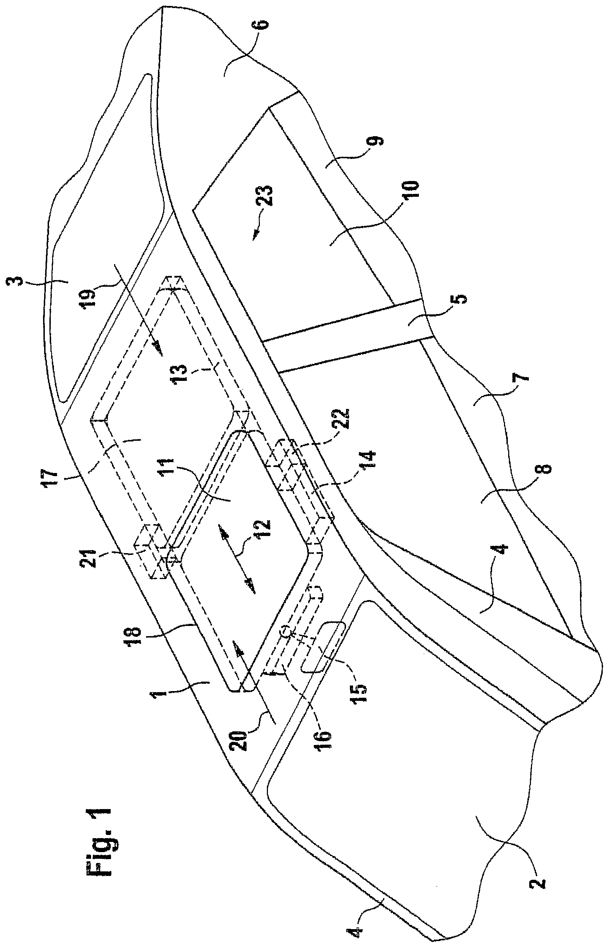

Figur 1 zeigt die Darstellung einer Dachfläche eines Kraftfahrzeuges, die die Fahrgastzelle des Kraftfahrzeuges begrenzt und in die ein mehrere Funktionsgruppen vereinigendes Dachmodul an geeigneter Stelle integriert ist.

Gemäß der in Figur 1 wiedergegebenen Darstellung ist ein Innenraum 23 eines Fahrzeugs, insbesondere eines Kraftfahrzeuges, durch eine Dachfläche 1, eine Frontscheibe 2 sowie eine Heckscheibe 3 begrenzt. Die hier seitlichen Begrenzungen des Innenraumes 23 des Fahrzeugs sind durch in Vordertüren 7 enthaltene Fensterscheiben 8 bzw. in Hintertüren 9 enthaltene, auf- und abbewegbare Fensterscheiben 10 gegeben. Die Dachfläche 1 ruht im wesentlichen auf zwei A-Säulen 4, zwei B-Säulen 5 sowie im Heckbereich des Fahrzeugs auf zwei C-Säulen 6.

In die Dachfläche 1 des Fahrzeugs ist in der Darstellung gemäß Figur 1 eine bewegbare Schiebedachfläche 11 eingelassen, welche in Richtung des mit Bezugszeichen 12 bezeichneten Doppelpfeils verfahrbar ist. Die Verfahrbewegung mit der bewegbaren Dachfläche 11 kann dieser entweder über eine manuell bedienbare, im Dachhimmel angeordnete Kurbel oder über einen die Dachfläche 11 antreibenden Stellantrieb 21 aufgeprägt werden. Die bewegbare Fläche 11 eines Schiebedaches kann, wie in der Darstellung gemäß Figur 1 gezeigt, lediglich in horizontaler Richtung in Richtung des Doppelpfeils 12 verschiebbar sein; daneben können in der Dachfläche 1 auch kombinierte Hub-/Schiebedächer vorgesehen sein, deren Fläche 11 aus der Dachfläche 1 in einem flachen Anstellwinkel ausgestellt werden kann und damit eine schlitzförmige Öffnung zur Belüftung des Innenraumes 23 des Fahrzeugs freigibt.

Die bewegbare Fläche 11 ist manuell oder mittels des Stellantriebes 21 in einen Hohlraum 17 in der Dachfläche 1 einfahrbar, wobei die bewegbare Fläche 11 in Rahmenelementen 13, die in der Dachfläche 1 entlang des Verschiebungsweges der bewegbaren Fläche eingelassen sind, verläuft. Bei Einfahrbewegung der bewegbaren Fläche 11 in den Hohlraum 17 der Dachfläche 1 ist eine Dachöffnung 18 freigegeben, was einer Offenstellung 19 entspricht. In der Darstellung gemäß Figur 1 befindet sich die mittels des Stellantriebes 21 entlang des Doppelpfeils 12 verfahrbare, bewegbare Fläche 11 in ihrer Schließstellung 20.

Figur 1 kann entnommen werden, dass sich ein mehrere Funktionsgruppen integrierendes Dachmodul 14 oberhalb des Bereichs des Fahrersitzes erstreckt, dem ein Kühlkörper 22 zur Abführung der Wärme der im Dachmodul 14 aufgenommenen Elektronikkomponenten zugeordnet sein kann. Das Dachmodul 14 kann ebensogut auf der Seite des Innenraums 23 aufgenommen sein, an welchem der Stellantrieb 21 der bewegbaren Fläche 11 aufgenommen ist. Das Dachmodul 14 kann sowohl unmittelbar am Stellantrieb 21, als auch an den die Dachfläche 1 hochkant durchziehenden Rahmenelementen 13 aufgenommen sein, an deren der Dachöffnung 18 zuweisenden Seiten die in horizontale Richtung bewegbare Fläche 11 verschiebbar ist.

Im Übergangsbereich zwischen der Dachöffnung 18 und der den Innenraum 23 zur Vorderseite begrenzenden Frontscheibe 2 ist im Fahrzeughimmel ein Display 16 angeordnet, welchem der Fahrer Informationen entnehmen kann, die zum Teil von in dem Dachmodul 14 integrierten Funktionen generiert werden. Unterhalb des Displays 16 im Dachhimmel der Dachfläche 1 ist ferner ein verstellbarer, abblendbarer Innenspiegel 15 angeordnet. In Figur 1 nicht dargestellt, kann im Bereich der Heckscheibe 3 ein ausfahrbares, mittels eines eigenen Antriebes betätigbares Sonnenrollo vorgesehen sein, was der übermäßigen Aufheizung des Innenraums 23 bei starker Sonneneinstrahlung entgegenwirken soll.

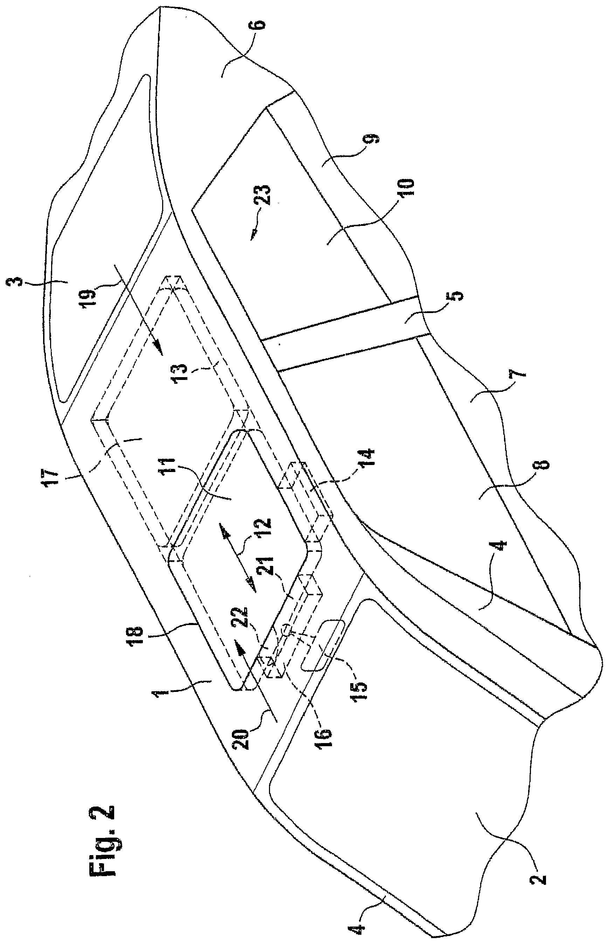

Figur 2 zeigt eine alternative Ausführungsform einer Dachfläche. Gemäß dieser Ausführungsvariante sind der Stellantrieb 21 und ein dem Stellantrieb zugeordneter Kühlkörper 22 zur Abführung der Betriebswärme im vorderen Dachflächenbereich oberhalb eines Displays 16 im Dachhimmel angeordnet. Das im Dachhimmel befindliche Display 16 ist in der Darstellung gemäß Figur 2 vom Stellantrieb 21 und dem diesen zugeordneten Kühlkörper 22 überdeckt und daher nicht sichtbar.

Figur 2 zeigt eine Reihe von Funktionalitäten eines Dachmoduls, welches an geeigneter Stelle in die Dachfläche eines Kraftfahrzeuges integrierbar ist.

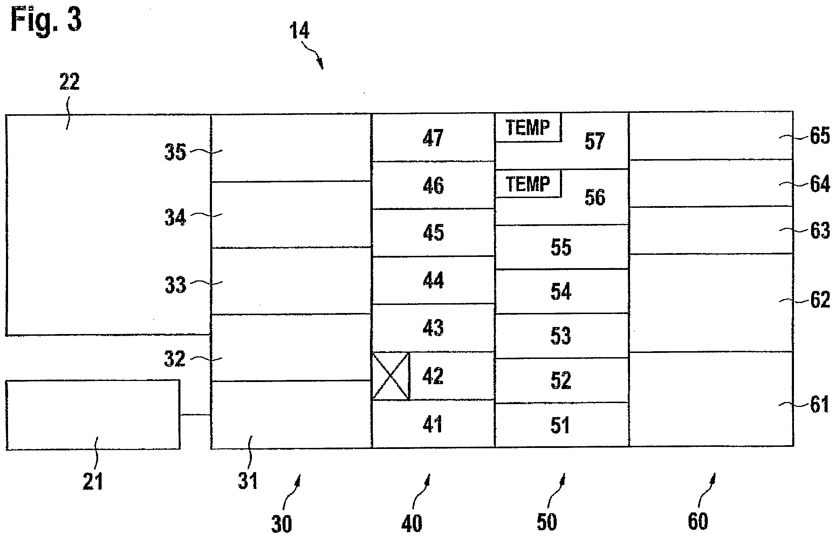

Dem Dachmodul 14, dessen schematischer Aufbau und dessen Unterteilung in mehrere Funktionsgruppen Figur 3 entnehmbar ist, kann einerseits bei einer elektrisch betätigbaren, bewegbaren Fläche 11 der Antrieb 21 unmittelbar zugeordnet sein, während einer übermäßigen Erwärmung des von einem metallischen Gehäuse umgebenen Dachmoduls 14 durch einen dem Dachmodul zugeordneten Kühlkörper 22 entgegengewirkt wird. Ein Kühlkörper 22 ist, je nach Einbauort des Dachmoduls 14 in einem Hohlraum der Dachfläche 1 des Fahrzeugs, jedoch nicht zwingend erforderlich.

Wie der Darstellung gemäß Figur 3 entnommen werden kann, umfasst das Dachmodul mehrere Funktionsgruppen 30, 40, 50 und 60. Die erste Funktionsgruppe ist mit Bezugszeichen 30, die zweite Funktionsgruppe ist durch das Bezugszeichen 40 gekennzeichnet, während die dritte Funktionsgruppe durch das Bezugszeichen 50 identifiziert ist und die vierte Funktionsgruppe das Bezugszeichen 60 trägt.

Innerhalb der ersten Funktionsgruppe 30 im Dachmodul 14 sind die Bedienfunktionen 31, wie das vollständige Öffnen, das vollständige Schließen der bewegbaren Fläche 11 in der Dachfläche 1 sowie deren teilweise Öffnung, implementiert; ebenso lassen sich in der Bedienfunktion 31 die bei Hub-/Schiebedächern geforderte Funktion eines flachen Ausstellens der bewegbaren Fläche 11 aus der im wesentlichen sich horizontal erstreckenden Dachfläche 1 initiieren. Ferner ist innerhalb der ersten Funktionsgruppe eine Gebläseansteuerung 32 vorgesehen, mit welcher ein den Innenraum 23 des Fahrzeugs belüftender Gebläsemotor ansteuerbar ist. Ferner umfasst die erste Funktionsgruppe 30 einen Geber 33, mit dem die Position einer mittels eines mechanischen Kurbeltriebes zu öffnenden bzw. zu schließenden bewegbaren Fläche 11 angezeigt wird. Bei Ausstattung der Dachfläche 1 mit einem Stellantrieb 21 ist zu dessen Positionserfassung im Dachmodul 14 innerhalb der ersten Funktionsgruppe 30 ein Hall-Sensor 34 integriert. Mittels des Hall-Sensors 34 lassen sich sowohl die aktuelle Drehlage des Stellantriebs 21, als auch dessen Geschwindigkeit bei der Betätigung der bewegbaren Fläche 11 in Öffnungs- bzw. in Schließrichtung erfassen. Ferner umfasst die erste Funktionsgruppe 30 des mehrfunktionalen Dachmoduls 14 eine Display-Ausgabe 35, über welche die einzelnen, vom Dachmodul 14 erfassten oder über Kommunikationsschnittstellen an dieses übertragene Informationen auf dem Display 16 am Innenraum 23 des Fahrzeugs dem Fahrer visuell oder akustisch zur Verfügung gestellt werden können.

Neben der ersten Funktionsgruppe 30 ist im mehrfunktionalen Dachmodul 14 eine zweite Funktionsgruppe 40 implementiert. Die zweite Funktionsgruppe 40 umfasst mehrere Schnittstellen des Dachmoduls 14 zu hier nicht dargestellten, jedoch mit dem Dachmodul 14 in Kommunikation tretenden externen Informationssystemen.

Mit Position 41 ist eine Innenspiegel-Abblendungsansteuerung bezeichnet, über welche bei starkem Lichteinfall von der Heckseite des Fahrzeugs her eine automatische Abblendung des Innenspiegels 15 an der Vorderseite der Dachfläche 1 und dem Fahrer zuweisend initiiert werden kann. Innerhalb der zweiten Funktionsgruppe 40 ist ferner einer Mikrophoneinheit 42 im mehrfunktionalen Dachmodul 14 integriert, welche als Teil einer Freisprechanlage 43 fungiert. Bei Anwahl der Mobiltelefonnummer des Fahrzeugführers kann eine Ausgabe des Anrufes über eine Lautsprechereinheit der Freisprechanlage 43 erfolgen, auf welche der Fahrzeugführer über die in das Dachmodul 14 integrierte Mikrophoneinheit 42 antworten kann.

Neben der eine Mikrophoneinheit 42 enthaltenden Freisprechanlage 43 kann im Dachmodul 14 darüber hinaus eine Schnittstelle 44 für ein Mobiltelefon vorgesehen sein. Mittels der Schnittstelle 44 ist es beispielsweise möglich, bei mit geöffneter, bewegbarer Schiebedachfläche 11 abgestelltem Fahrzeug und einsetzendem Regen ein Signal an das Mobiltelefon des Fahrers zu senden, mit welchem dieser auf den geöffneten Zustand der bewegbaren Fläche 11 in der Dachfläche 1 des Fahrzeugs aufmerksam gemacht werden kann. Zur Erfassung einsetzenden Niederschlages dient ein innerhalb einer vierten Funktionsgruppe 60 im Dachmodul 14 implementierter Regensensor 62. Neben der Detektion eines geöffneten Zustands 19 einer bewegbaren Fläche 11 in der Dachfläche 1 einer Limousine kann über eine Kommunikationsschnittstelle 44 zu einem Mobiltelefon auch der geöffnete Zustand eines Cabrio-Verdecks eines Cabriolets detektiert werden, wenn im Bereich von dessen versteifter Frontscheibe 2 bzw. an einem Überrollbügel ein erfindungsgemäß konfiguriertes mehrfunktionales Dachmodul 14 integriert ist.

Die zweite Funktionsgruppe 40 umfasst darüber hinaus Empfangs- bzw. Sendeeinrichtungen 45, 46, mit welchen Signale von externen Informationssystemen, wie zum Beispiel ein Rundfunkempfang empfangen werden können oder eine Verbindung zu Navigationssystemen hergestellt werden kann. Darüber hinaus enthält die zweite Funktionsgruppe 40 im mehrfunktionalen Dachmodul 14 eine Empfangsfläche 47, anhand der eine im Fahrzeugfunk ferngesteuerte Uhr mit der jeweiligen Ortszeit abgleichbar ist.

In einer weiteren, der dritten Funktionsgruppe 50 des mehrfunktionalen Dachmoduls 14 sind Funktionen zur Klimatisierung bzw. zur Überwachung des Innenraums 23 des Fahrzeugs implementiert.

Mit Bezugszeichen 51 ist die Ansteuerung der Innenraumbeleuchtung bezeichnet, die beispielsweise dann aktiviert wird, wenn eine der Fahrzeugtüren 7 bzw. 9 geöffnet wird. Ferner kann innerhalb der dritten Funktionsgruppe 50 des Dachmoduls 14 ein Sensor 52 aufgenommen sein, der abhängig vom Resttageslicht die Einschaltung der Fahrzeugaußenbeleuchtung übernimmt. Mit Bezugszeichen 53 ist eine Bewegungsmeldungsfunktion bezeichnet, über welche sowohl Bewegungen von Fahrzeuginsassen, zum Beispiel auf dem Rücksitz innerhalb des Innenraums 23 untergebrachte Kinder oder auch die Bewegungen von Personen, die sich im Gefahrenbereich eines rangierenden Kraftfahrzeugs aufhalten können, detektiert werden. Bezugszeichen 54 bezeichnet einen Sitzbelegungssensor. Mittels dieses Sensors wird ermittelt, wo die Insassen eines Fahrzeugs im Innenraum 23 Platz genommen haben. Anhand der Sitzbelegung der Insassen kann eine Gewichtsverteilung der Fahrzeugmasse vorgenommen werden, die zentralen Airbag-Steuersystemen und weiteren Systemen zur Erhöhung der passiven Sicherheit der Fahrzeuginsassen zur Ermittlung geeigneter Auslöseschwellen zugeführt werden kann. Daneben umfasst die dritte Funktionsgruppe 50 des mehrfunktionalen Dachmoduls 14 eine Aktivierung einer Innenbeleuchtung 55, zum Beispiel Leselampen.

Gekoppelt mit dem Sensor 52 zur automatischen Lichteinschaltung kann innerhalb der dritten Funktionsgruppe 50 eine Sonnenschutzsensorik 56 aufgenommen sein. Während der Sensor 52 auf den Resttageslichteinfall reagiert, kann mittels der Sensorik 56 die Temperatur erfasst werden und bei Überschreiten eines bestimmten Temperaturgrenzwertes eine Aktivierung von Sonnenrollos, beispielsweise im Bereich der Heckscheiben oder im Bereich der Fensterscheiben 10 der Hintertüren 9, ausgelöst werden. Mit Bezugszeichen 57 ist die Außentemperaturerfassung gekennzeichnet, anhand der beispielsweise die Aktivierung einer Klimaanlage bzw. eines Gebläses zur Klimatisierung des Innenraums 23 des Fahrzeugs erfolgt. Zur Einsparung von Elektronikkomponenten kann die Ermittlung des Tageslichteinfalls über einen der Sensoren 52 bzw. 56 erfolgen, während die Außentemperaturerfassung jahreszeitunabhängig über den Sensor 57 innerhalb der dritten Funktionsgruppe 50 des mehrfunktionalen Dachmoduls 14 erfolgen kann.

Des weiteren ist im mehrfunktionalen Dachmodul 14 gemäß der Erfindung eine vierte Funktionsgruppe implementiert, die durch das Bezugszeichen 60 gekennzeichnet ist. Innerhalb der vierten Funktionsgruppe lassen sich Sicherungsfunktionen, wie zum Beispiel die Initiierung einer Diebstahlsicherung 61 bei Verlassen und Verriegeln des Fahrzeugs darstellen. Mittels der Diebstahlsicherung 61 kann zum Beispiel bei Verlassen und Verriegeln der Fahrzeugtüren 7 bzw. 8 die Aktivierung eines als Rundum-Bewegungssensors beschaffenen Bewegungssensors 53 erfolgen, mit welchem Bewegungen im Innenraum 23 des Fahrzeugs sowie Bewegungen von sich außerhalb des Fahrzeugs aufhaltenden Personen detektiert werden können. Abhängig von den durch den Rundum-Bewegungssensor 53 aufgefangenen Signalen lässt sich über die Diebstahlsicherung 61 der vierten Funktionsgruppe 60 im mehrfunktionalen Dachmodul 14 eine Alarmanlage auslösen. Neben der Diebstahlsicherung 61 ist innerhalb der vierten Funktionsgruppe 60 im mehrfunktionalen Dachmodul 14 der bereits erwähnte Regensensor 62 implementiert. Mittels des Regensensors 62 lassen sich aufgrund des Auftreffens von Niederschlag auf einer Glasfläche einstellende Änderungen des Brechnungsindex' feststellen. Die Änderung des Brechungsindex', detektiert durch den Regensensor 62, wird an die Schnittstelle 44 für ein Mobiltelefon innerhalb der zweiten Funktionsgruppe 40 des mehrfunktionalen Dachmoduls 14 übermittelt, so dass der Fahrer bei einsetzendem Regen auf eine in Offenstellung befindliche bewegbare Fläche 11 der Dachfläche 1 seines Fahrzeugs hingewiesen werden kann. Die Kommunikationsschnittstelle kann auch dazu dienen, an ein vom Fahrer mitgeführtes Mobiltelefon Fehlfunktionen zu übermitteln und diese dem Fahrer anzuzeigen. Solche für das Mobiltelefon mitzuteilende Fehlfunktionen können z. B. sein: automatisches Schließen des Schiebedaches/Fensterheberansteuerung/Fahrzeug nicht verriegelt.

Daneben sind innerhalb der vierten Funktionsgruppe 60 im mehrfunktionalen Dachmodul 14 eine Funkfernbedienung 63 implementiert sowie ein codierte Öffnungssignale aussendender Garagentoröffner 64. Daneben kann die vierte Funktionsgruppe 60 des Dachmoduls 14 eine Ansteuerung 65 für hier nicht dargestellte Solarzellen enthalten. Die Solarzellen, die in der Dachfläche 1 integriert sein können, oder die sich an der Oberseite des Dachmoduls 14 befinden, versorgen beispielsweise den über die Ansteuerroutine 32 ansteuerbaren Gebläsemotor mit der erforderlichen Spannung. Daneben können über die in der Dachfläche 1 eines Kraftfahrzeuges vorgesehenen Solarzellen weitere elektrische Komponenten mit Energie versorgt werden, so dass der im Kraftfahrzeug vorhandene Energiespeicher bei starker Sonneneinstrahlung entlastet werden kann.

Das in Figur 3 schematisch skizzierte mehrfunktionale Dachmodul 14 kann durch die Vorhaltung der skizzierten Adaptionsmöglichkeiten innerhalb der verschiedenen Funktionsgruppen 30, 40, 50 bzw. 60 schnell auf Kundenzusatzwünsche reagieren, da sich die im Dachmodul 14 implementierten Sensoren bzw. Kommunikationsschnittstellen für mehrere Funktionen verwenden lassen, so dass die Anzahl der im Dachmodul 14 vorhandenen Elektronikkomponenten begrenzt werden kann. Je nach Anwendung können die Funktionsgruppen 30, 40, 50 bzw. 60 auch nach weiteren Gesichtspunkten zusammengestellt werden, auch die Anzahl derselben kann in Abhängigkeit der implementierten Funktionen variieren.

## Patentansprüche

1. Dachmodul zur Aufnahme in einem Hohlraum einer Dachfläche (1) eines Fahrzeugs, wobei in die Dachfläche (1) eine manuell betätigbare bewegbare Fläche (11) oder eine mittels eines Stellantriebes (21) betätigbare Fläche (11) integriert ist und das Dachmodul (14) am Antrieb (21) oder Rahmenelementen (13) der bewegbaren Fläche (11) aufgenommen ist, wobei im Dachmodul (14) Elektronikkomponenten und Sensoren (34, 52, 56, 57, 62) aufgenommen sind, die Funktionsgruppen (30, 40, 50, 60) zur Bedienung der bewegbaren Fläche (11) und zur Aktivierung von Fahrzeugsicherungssystemen darstellen, **dadurch gekennzeichnet, dass** die Elektronikkomponenten und Sensoren ferner Funktionsgruppen (30, 40, 50, 60) zur Überwachung und Klimatisierung des Fahrzeuginnenraums (23) und zur Kommunikation mit externen Telekommunikationssystemen (43, 44, 45, 46, 47) darstellen, wobei das Dachmodul ferner eingerichtet ist, Warn-Information oder Fehlfunktionen über die externen Telekommunikationssysteme zu übermitteln, insbesondere an ein Mobiltelefon, das vom Fahrer des Fahrzeugs mitgeführt wird.

2. Dachmodul gemäß Anspruch 1, **dadurch gekennzeichnet, dass** das Dachmodul (14) von einem Gehäuse aus metallischem Werkstoff umgeben und dem Dachmodul (14) ein Kühlkörper (22) zugeordnet ist.

3. Dachmodul gemäß Anspruch 1, **dadurch gekennzeichnet, dass** das Dachmodul (14) im Dachhimmel der Dachfläche (1) im Bereich des Fahrersitzes aufgenommen ist und als Teil einer Freisprechanlage (43) eine ausfahrbare Mikrophoneinheit (42) enthält.

4. Dachmodul gemäß Anspruch 1, **dadurch gekennzeichnet, dass** die erste Funktionsgruppe (30) im Dachmodul (14) die Bedienfunktion (31) der bewegbaren Fläche (11), eine Gebläseansteuerung (32), einen Hall-Sensor (34) zur Drehzahlerfassung des Antriebes (21) der bewegbaren Fläche (11) und Ausgabekanäle (35) zu einem Informationsdisplay (16) im Innenraum (23) des Fahrzeugs umfasst.

5. Dachmodul gemäß Anspruch 1, **dadurch gekennzeichnet, dass** die zweite Funktionsgruppe (40) im Dachmodul (14) Kommunikationsschnittstellen (42, 43; 44, 45, 46, 47) zu fahrzeugexternen Informationssystemen enthält.

6. Dachmodul gemäß Anspruch 5, **dadurch gekennzeichnet, dass** die zweite Funktionsgruppe (40) im Dachmodul (14) eine Ansteuerung (41) für einen Innenspiegel (15) enthält, eine Freisprechanlage (43) sowie einen Empfangsteil (44) als Schnittstelle für ein Mobiltelefon, ferner Sende-/Empfangseinrichtungen (45, 46) zum Datenaustausch für Navigationssysteme, Rundfunk und über Funk gesteuerte Fahrzeuguhren (47).

7. Dachmodul gemäß Anspruch 1, **dadurch gekennzeichnet, dass** die dritte Funktionsgruppe (50) im Dachmodul (14) Innen- und Außenbeleuchtung des Fahrzeugs aktivierende Sensoren (51, 52), den Lichteinfall und Bewegungen von Personen (53, 56) sowie die Temperatur erfassende Sensoren (57) umfasst.

8. Dachmodul gemäß Anspruch 7, **dadurch gekennzeichnet, dass** die dritte Funktionsgruppe (50) im Dachmodul (14) einen Sitzbelegungssensor (54), einen Rundum-Überwachungssensor (55) für den Innenraum (23) sowie einen Bewegungen von Fahrzeuginsassen und von sich am Fahrzeug aufhaltenden Personen erfassenden Sensor (53) umfasst.

9. Dachmodul gemäß Anspruch 1, **dadurch gekennzeichnet, dass** die vierte Funktionsgruppe (60) im mehrfunktionalen Dachmodul (14) einen Regensensor (62), den Empfangsteil einer Zentralverriegelung, die Aktivierung (61) einer Diebstahlsicherung, eine Garagentoraktivierungs-Sendereinheit (64) sowie eine Ansteuerung (65) von Solarzellen zur Versorgung elektrischer Klimatisierungskomponenten des Innenraums (23) umfasst.

10. Verfahren zum Betreiben eines Dachmoduls eines Kraftfahrzeugs - insbesondere nach einem der Ansprüche 1 bis 9 - mit Funktionsgruppen bildenden Elektronikkomponenten und Sensoren und einer integrierten Kommunikationsschnittstelle zu einem externen Telekommunikationssystem **dadurch gekennzeichnet, dass** die Funktionsgruppen Signale generieren, die mittels einer Auswerteeinheit bearbeitet, und gemäß vorgebbarer Auswertekriterien über die Kommunikationsschnittstelle an das externe Telekommunikationssystem gesendet werden, wobei das Verfahren ferner umfasst, Warn-Information oder Fehlfunktionen über das externe Telekommunikationssystem zu übermitteln, insbesondere an ein Mobiltelefon, das vom Fahrer des Fahrzeugs mitgeführt wird.

11. Verfahren nach Anspruch 10, **dadurch gekennzeichnet, dass** bei Vorliegen eines Regensignals eines Regensensors und einem Signal mindestens einer offenen Öffnung des Kraftfahrzeugs - insbesondere ein Schiebedach, ein Fenster oder ein Cabrio-Verdeck - über die Kommunikationsschnittstelle eine Warn-Information an ein externes Mobiltelefon gesendet wird.

12. Verfahren nach einem der Ansprüche 10 oder 11, **dadurch gekennzeichnet, dass** beim Schließen oder Verriegeln eines beweglichen Teils am Kraftfahrzeug ein Fehler-Signal generiert wird, wenn das Teil nicht vollständig, korrekt schließt, und daraufhin über die Kommunikationsschnittstelle eine Warn-Information an ein externes Mobiltelefon gesendet wird.

13. Verfahren nach einem der Ansprüche 10 oder 12, **dadurch gekennzeichnet, dass** beim Vorliegen eines Signals zur Aktivierung der Diebstahlwarneinrichtung über die Kommunikationsschnittstelle eine Warn-Information an ein externes Mobiltelefon gesendet wird.

14. Verfahren nach einem der Ansprüche 10 oder 13, **dadurch gekennzeichnet, dass** von einem externen Telekommunikationssystem über die Kommunikationsschnittstelle Informationen mit dem Dachmodul ausgetauscht, oder - insbesondere Steuerbefehle zur Betätigung bestimmter Funktionen der Funktionsgruppen - gesendet werden können.

## Claims

1. Roof module to be housed in a cavity of a roof surface (1) of a vehicle, wherein a moveable surface (11) which can be actuated manually or a surface (11) which can be actuated by means of an actuator drive (21) is integrated into the roof surface (1), and the roof module (14) is accommodated on the drive (21) or frame elements (13) of the moveable surface (11), wherein electronic components and sensors (34, 52, 56, 57, 62) which constitute function groups (30, 40, 50, 60) for controlling the moveable surface (11) and for activating vehicle safety systems are accommodated in the roof module (14), **characterized in that** the electronic components and sensors also constitute function groups (30, 40, 50, 60) for monitoring and air-conditioning the passenger compartment (23) of the vehicle and for communicating with external telecommunication systems (43, 44, 45, 46, 47), wherein the roof module is also configured to communicate warning information or malfunctions via the external telecommunication systems, in particular to a mobile phone which is carried by the driver of the vehicle.

2. Roof module according to Claim 1, **characterized in that** the roof module (14) is surrounded by a housing made of metallic material, and a heat sink (22) is assigned to the roof module (14).

3. Roof module according to Claim 1, **characterized in that** the roof module (14) is accommodated in the inner roof lining of the roof surface (1), in the region of the driver's seat, and contains an extendible microphone unit (42) as part of a hands-free system (43).

4. Roof module according to Claim 1, **characterized in that** the first function group (30) in the roof module (14) comprises the operator control function (31) of the moveable surface (11), a blower actuation means (32), a Hall sensor (34) for detecting the rotational speed of the drive (21) of the moveable surface (11) and output channels (35) leading to an information display (16) in the passenger compartment (23) of the vehicle.

5. Roof module according to Claim 1, **characterized in that** the second function group (40) in the roof module (14) contains communication interfaces (42, 43; 44, 45, 46, 47) to vehicle-external information systems.

6. Roof module according to Claim 5, **characterized in that** the second function group (40) in the roof module (14) contains an actuation means (41) for an interior rear-view mirror (15), a hands-free system (43) and a receiver component (44) as an interface for a mobile phone, in addition transceiver devices (45, 46) for exchanging data for navigation systems, radio and radio-controlled vehicle clocks (47).

7. Roof module according to Claim 1, **characterized in that** the third function group (50) in the roof module (14) comprises sensors (51, 52) which activate the interior lighting and exterior lighting of the vehicle, and sensors which detect the incident light and movements of persons (53, 56) as well as the temperature.

8. Roof module according to Claim 7, **characterized in that** the third function group (50) in the roof module (14) comprises a seat occupation sensor (54), a 360° monitoring sensor (55) for the passenger compartment (23) and a sensor (53) which detects movements of vehicle occupants and of persons located in the vehicle.

9. Roof module according to Claim 1, **characterized in that** the fourth function group (60) in the multifunctional roof module (14) comprises a rain sensor (62), the receiver component of a central locking system, the activation means (61) for an anti-theft protection system, a garage door-activation transmitter unit (64) and an actuation means (65) of solar cells for supplying electrical air-conditioning components of the passenger compartment (23).

10. Method for operating a roof module of a motor vehicle, in particular according to one of Claims 1 to 9, with electronic components and sensors which form function groups, and an integrated communication interface to an external telecommunication system, **characterized in that** the function groups generate signals which are processed by means of an evaluation unit and are transmitted to the external telecommunication system according to predefinable evaluation criteria via the communication interface, wherein the method also comprises communicating warning information or malfunctions via the external telecommunication system, in particular to a mobile phone which is carried by the driver of the vehicle.

11. Method according to Claim 10, **characterized in that** when a rain signal of a rain sensor is present and there is a signal relating to at least one open opening of the motor vehicle, in particular a sunroof, a window or a convertible roof, warning information is transmitted to an external mobile phone via the communication interface.

12. Method according to one of Claims 10 or 11, **characterized in that** when a moveable part on the motor vehicle is closed or locked, a fault signal is generated if the part does not close completely or correctly and subsequently warning information is transmitted to an external mobile phone via the communication interface.

13. Method according to one of Claims 10 or 12, **characterized in that** when a signal for activating the anti-theft warning device is present, warning information is transmitted to an external mobile phone via the communication interface.

14. Method according to one of Claims 10 or 13, **characterized in that** information from an external telecommunication system can be exchanged with the roof module via the communication interface, or information from an external telecommunication system, in particular control commands for actuating specific functions of the function groups, can be transmitted via the communication interface.

## Revendications

1. Module de toit destiné à être logé dans un espace creux d'une surface de toit (1) d'un véhicule, une surface mobile (11) actionnable manuellement ou une surface (11) pouvant être actionnée au moyen d'un servomoteur (21) étant intégrée dans la surface de toit (1) et le module de toit (14) étant accueilli sur le mécanisme d'entraînement (21) ou des éléments de cadre (13) de la surface mobile (11), des composants électroniques et des capteurs (34, 52, 56, 57, 62) étant logés dans le module de toit (14), lesquels représentent des groupes de fonctions (30, 40, 50, 60) servant à la commande de la surface mobile (11) et servant à l'activation de systèmes de sécurité du véhicule, **caractérisé en ce que** les composants électroniques et les capteurs représentent en outre des groupes de fonctions (30, 40, 50, 60) servant à la surveillance et à la climatisation de l'habitacle du véhicule (23) et servant à la communication avec des systèmes de télécommunication externes (43, 44, 45, 46, 47), le module de toit étant en outre conçu pour communiquer des infirmations d'alerte ou des défauts de fonctionnement par le biais des systèmes de télécommunication externes, notamment à un téléphone mobile qui est emporté par le conducteur du véhicule.

2. Module de toit selon la revendication 1, **caractérisé en ce que** le module de toit (14) est entouré par un boîtier en matériau métallique et un dissipateur de chaleur (22) est associé au module de toit (14).

3. Module de toit selon la revendication 1, **caractérisé en ce que** le module de toit (14) est logé dans le pavillon de la surface de toit (1) dans la zone du siège du conducteur et contient une unité à microphone (42) extractible en tant que partie d'une installation mains libres (43).

4. Module de toit selon la revendication 1, **caractérisé en ce que** le premier groupe de fonctions (30) dans le module de toit (14) comprend la fonction de contrôle (31) de la surface mobile (11), une commande de ventilateur (32), un capteur à effet Hall (34) servant à détecter la vitesse de rotation du mécanisme d'entraînement (21) de la surface mobile (11) et des canaux de sortie (35) vers un écran d'information (16) dans l'habitacle (23) du véhicule.

5. Module de toit selon la revendication 1, **caractérisé en ce que** le deuxième groupe de fonctions (40) dans le module de toit (14) contient des interfaces de communication (42, 43 ; 44, 45, 46, 47) vers des systèmes d'information externes au véhicule.

6. Module de toit selon la revendication 5, **caractérisé en ce que** le deuxième groupe de fonctions (40) dans le module de toit (14) contient une commande (41) pour un rétroviseur intérieur (15), une installation mains libres (43) ainsi qu'une partie réceptrice (44) en tant qu'interface pour un téléphone mobile, et en outre de dispositifs d'émission/réception (45, 46) destinés à l'échange de données pour des systèmes de navigation, la radiodiffusion et des horloges de véhicule (47) radiopilotées.

7. Module de toit selon la revendication 1, **caractérisé en ce que** le troisième groupe de fonctions (50) dans le module de toit (14) comprend des capteurs (51, 52) qui activent l'éclairage intérieur et extérieur du véhicule, des capteurs qui détectent l'incidence de la lumière et des mouvements de personnes (53, 56) ainsi que la température (57).

8. Module de toit selon la revendication 7, **caractérisé en ce que** le troisième groupe de fonctions (50) dans le module de toit (14) comprend un capteur d'occupation de siège (54), un capteur de surveillance périphérique (55) pour l'habitacle (23) ainsi qu'un capteur (53) qui détecte les mouvements des occupants du véhicule et des personnes qui se tiennent près du véhicule.

9. Module de toit selon la revendication 1, **caractérisé en ce que** le quatrième groupe de fonctions (60) dans le module de toit (14) multifonctions comprend un capteur de pluie (62), la partie réceptrice d'un verrouillage centralisé, l'activation (61) d'une sécurité antivol, une unité émettrice d'activation de porte de garage (64) ainsi qu'une commande (65) de cellules solaires destinées à l'alimentation des composants électriques de climatisation de l'habitacle (23).

10. Procédé pour faire fonctionner un module de toit d'un véhicule automobile, notamment selon l'une des revendications 1 à 9, comprenant des composants électroniques et des capteurs formant des groupes de fonctions et une interface de communication vers un système de télécommunication externe, **caractérisé en ce que** les groupes de fonctions génèrent des signaux qui sont traités au moyen d'une unité d'interprétation et envoyés au système de télécommunication externe par le biais de l'interface de communication conformément à des critères d'interprétation pouvant être prédéfinis, le procédé comprenant en outre la communication d'informations d'alerte ou de défauts de fonctionnement par le biais du système de télécommunication externe, notamment à un téléphone mobile qui est emporté par le conducteur du véhicule.

11. Procédé selon la revendication 10, **caractérisé en ce qu'**en présence d'un signal de pluie d'un capteur de pluie et d'un signal d'au moins une ouverture ouverte du véhicule, notamment d'un toit ouvrant, d'une fenêtre ou d'une capote de cabriolet, une information d'alerte est envoyée à un téléphone mobile externe par le biais de l'interface de communication.

12. Procédé selon l'une des revendications 10 ou 11, **caractérisé en ce que** lors de la fermeture ou du verrouillage d'une partie mobile sur le véhicule automobile, un signal de défaut est généré lorsque la partie ne se ferme par entièrement et correctement, et une information d'alerte est ensuite envoyée à un téléphone mobile externe par le biais de l'interface de communication.

13. Procédé selon l'une des revendications 10 ou 12, **caractérisé en ce qu'**en présence d'un signal destiné à l'activation du dispositif d'alerte d'effraction, une information d'alerte est envoyée à un téléphone mobile externe par le biais de l'interface de communication.

14. Procédé selon l'une des revendications 10 ou 13, **caractérisé en ce que** des informations peuvent être échangées avec le module de toit ou envoyées par un système de télécommunication externe par le biais de l'interface de communication, notamment des instructions de commande destinées à actionner des fonctions données des groupes de fonctions.
